# EUROPEAN PATENT APPLICATION

(11) **EP 4 660 624 A1**
(43) Date of publication of application: **10.12.2025**
(21) Application number: 25174812.5
(22) Date of filing: 07.05.2025
(51) Int. Cl.: G01N 27/9013, G01B 21/00, G01N 29/00

(54) **INSPECTION SYSTEM AND METHOD FOR INSPECTING A SURFACE**

(30) Priority: 05.06.2024 GB 202407946
(71) Applicant: Rolls-Royce plc, London N1 9FX (GB)
(72) Inventor: Gameros Madrigal, Andres, Derby, DE24 8BJ (GB); Major, Ewan, Derby, DE24 8BJ (GB); Elbanna, Mohamed, Derby, DE24 8BJ (GB); Mohammad, Abdelkhalick, Derby, DE24 8BJ (GB); Axinte, Dragos, Derby, DE24 8BJ (GB); Zeng, Tianyi, Derby, DE24 8BJ (GB); Sun, Erhui, Derby, DE24 8BJ (GB); Xie, Caoyu, Derby, DE24 8BJ (GB)
(74) Representative: Rolls-Royce plc

(57) **Abstract**

An inspection system (100) for inspecting a surface (102) includes a macromanipulator (104) including an inspection end (106) configured to be disposed proximal to the surface (102). The inspection system (100) further includes a micromanipulator (108) coupled to the inspection end (106). The. micromanipulator (108) includes a housing (110), a pair of guide rails (112) at least partially disposed within and fixedly coupled to the housing (110), a probe support (114) slidably coupled to the pair of guide rails (112), an actuating arm (116) disposed within the housing (110) and coupled to the probe support (114) via a scotch yoke mechanism (118), and an actuating mechanism (120) configured to rotate the actuating arm (116) relative to the housing (110). The inspection system (100) further includes a probe (122) coupled to the probe support (114) for inspecting the surface (102).

## Description

### FIELD

This disclosure relates to an inspection system for inspecting a surface and a method for inspecting a surface.

### BACKGROUND

Machines often rely on the integrity of their components in order to operate in an efficient and safe manner. Thus, inspection of components that may be damaged during operation of the machine, or which may be manufactured with defects, is important for a continued operation of the machine.

Components of gas turbine engines, such as a compressor and turbine blades, are subjected to extremes of temperatures for prolonged periods and the lives of passengers and crew travelling on aircraft powered by such engines rely on their integrity. Such components can develop defects over time. However, inspecting them for defects is complicated as they may be generally inaccessibly located within the engine and may have complex geometries. In some cases, one may have to dismantle an engine to inspect the integrity of the components. However, that may be a costly and time-consuming operation. Upon dismantling an engine, if the components are found to be only partially worn and yet well within safety requirements, they are typically replaced rather than left for a subsequent dismantling, re-inspection, and rebuilding of the engine. This may also be wasteful and expensive. It may also be important that the components are not damaged by the process of dismantling the engine, inspecting the components, and rebuilding the engine.

To avoid the dismantling of the gas turbine engines and costs associated with the dismantling, borescope inspections are commonly performed by skilled technicians. The borescope inspections typically use borescope ports across the gas turbine engines to perform visual inspections of the components of interest of the gas turbine engines. However, in the visual inspection of the components of the gas turbine engines, there may be some inherent limitations. For example, detection of small defects (e.g., cracks) may be difficult. Moreover, the visual inspections may rely on image quality and judging skills of the technicians. Furthermore, the visual inspection of the defects may prevent detection of defects beyond a surface of the component (e.g., sub-surface cracks).

Multiple Non-Destructive-Evaluation (NDE) techniques have been developed to identify defects that may not be detected by pure visual inspection. As an example, eddy currents (a type of electric current) are commonly used to detect small defects (e.g., cracks) at a surface and a sub-surface level. However, inspection procedures using such techniques require a fine manipulation inside the engine to identify an existence of the defect.

### SUMMARY

In a first aspect, there is provided an inspection system for inspecting a surface. The inspection system includes a macromanipulator. The macromanipulator includes an inspection end configured to be disposed proximal to the surface. The macromanipulator is movable with respect to the surface. The inspection system further includes a micromanipulator coupled to the inspection end of the micromanipulator. The micromanipulator includes a housing. The micromanipulator further includes a pair of guide rails at least partially disposed within and fixedly coupled to the housing. The micromanipulator further includes a probe support slidably coupled to the pair of guide rails. The micromanipulator further includes an actuating arm disposed within the housing and coupled to the probe support via a scotch yoke mechanism. The micromanipulator further includes an actuating mechanism configured to rotate the actuating arm relative to the housing. The scotch yoke mechanism is configured to translate the probe support in response to the rotation of the actuating arm such that the probe support slides along the pair of guide rails. The inspection system further includes a probe coupled to the probe support for inspecting the surface.

The inspection system may allow the micromanipulator to perform a systematic and fine inspection of the surface of a component inside a confined space, for example, a confined space in a gas turbine engine. The inspection system may separate movements of the micromanipulator from movements of the micromanipulator. The separation of the movements may allow the micromanipulator to move in a controlled, accurate, and a repeatable manner. Further, the inspection system including the actuating mechanism, in conjunction with the scotch yoke mechanism, may provide a reciprocating linear actuation of the probe on a very small scale. Thus, the inspection system may be suitable for small working volumes and may be scaled as appropriate. The fine inspection inside the confined space may help to identify existence of small defects, such as cracks.

In some embodiments, the actuating mechanism includes a magnet fixedly coupled to the actuating arm. The actuating mechanism further includes an actuating coil disposed around the housing. The actuating mechanism further includes an actuating circuit electrically connected to the actuating coil and configured to provide an actuating current to the actuating coil. The actuating coil is configured to electromagnetically rotate the magnet and the actuating arm relative to the housing in response to the actuating current.

The actuating coil may be used to create a magnetic field. A direction of the magnetic field may be reversed by reversing a polarity of the actuating current.

In some embodiments, the magnet is a neodymium magnet.

In some embodiments, the actuating coil is a copper coil.

In some embodiments, the inspection system further includes an extension arm extending from the probe support, such that the probe is distal to the housing.

The extension arm may prevent any interference of a magnetic field of the micromanipulator with signals of the probe. In some cases, the extension arm may further facilitate miniaturisation of the probe.

In some embodiments, the probe is an eddy current probe.

In some embodiments, the scotch yoke mechanism includes a pair of slots and a pair of pins. Each pin from the pair of pins at least partially and rotatably inserts a corresponding slot from the pair of slots.

In some embodiments, the macromanipulator is a robotic arm.

In some embodiments, the inspection system further includes a spherical joint movably coupling the micromanipulator to the inspection end of the macromanipulator.

The spherical joint may allow rotation of the micromanipulator such that the probe is oriented perpendicular to the surface.

In some embodiments, the inspection system further includes a spring disposed around the spherical joint and configured to bias the micromanipulator towards the surface.

The spring may ensure that a contact between the micromanipulator and the surface is maintained.

In some embodiments, the housing has a circular cross section.

In some embodiments, a diameter of the housing is less than 50 millimetres.

In some embodiments, the micromanipulator is removably coupled to the macromanipulator.

Thus, the inspection system may be modular and the micromanipulator may be appended on to the inspection end of a variety of macromanipulators for inspecting the surface.

In a second aspect, there is provided a method for inspecting a surface. The method includes providing a macromanipulator including an inspection end configured to be disposed proximal to the surface. The macromanipulator is movable with respect to the surface. The method further includes providing a micromanipulator coupled to the inspection end of the macromanipulator. The micromanipulator includes a housing. The micromanipulator further includes a pair of guide rails at least partially disposed within and fixedly coupled to the housing. The micromanipulator further includes a probe support slidably coupled to the pair of guide rails. The micromanipulator further includes an actuating arm disposed within the housing and coupled to the probe support via a scotch yoke mechanism. The micromanipulator further includes an actuating mechanism configured to rotate the actuating arm relative to the housing. The scotch yoke mechanism is configured to translate the probe support in response to the rotation of the actuating arm such that the probe support slides along the pair of guide rails. The method further includes providing a probe coupled to the probe support for inspecting the surface. The method further includes moving via the macromanipulator, the micromanipulator relative to the surface at a plurality of inspection regions on the surface. The method further includes translating, via the actuating mechanism, the probe relative to the housing of the micromanipulator at each of the plurality of inspection regions. The method further includes inspecting, via the probe, the surface while the probe is moving relative to the housing of the micromanipulator at each of the plurality of inspection regions.

In some embodiments, the actuating mechanism includes a magnet fixedly coupled to the actuating arm. The actuating mechanism further includes an actuating coil disposed around the housing. The actuating mechanism further includes an actuating circuit electrically connected to the actuating coil. The translating the probe further includes providing, via the actuating circuit, an actuating current to the actuating coil. The translating the probe further includes electromagnetically rotating, via the actuating coil, the magnet and the actuating arm relative to the housing in response to the actuating current.

In some embodiments, the method further includes rotating, via a spherical joint, the micromanipulator relative to the macromanipulator to orient the probe perpendicular to the surface.

In some embodiments, the method further includes biasing, via a spring disposed around the spherical joint, the micromanipulator towards the surface.

In some embodiments, the inspecting the surface further includes eddy current testing of the surface via the probe.

In some embodiments, the method further includes recording coordinates of the micromanipulator at each of the plurality of inspection regions.

In some embodiments, the method further includes mapping the coordinates of the micromanipulator at each of the plurality of inspection regions in a digital representation of the plurality of inspection regions on the surface.

By recording the coordinates of the micromanipulator and mapping the coordinates of the micromanipulator at each of the plurality of inspection regions in the digital representation, it may be possible to record a surface map of the surface in the digital representation.

In some embodiments, the method further includes when the probe detects a defect in one or more inspection regions from the plurality of inspection regions, visually representing the defect and corresponding coordinates in the digital representation.

Visually representing the defect and the corresponding coordinates in the digital representation may facilitate interpretation of the defect by an operator and showcase a location of the defect to the operator. Further, an appearance of the defect may also be clear to the operator.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
**FIG. 1** shows a streamwise sectional view of a gas turbine engine;
**FIG. 2** shows a schematic view of an inspection system for inspecting a surface in accordance with a first embodiment of the present disclosure;
**FIG. 3A** shows a schematic perspective view of a micromanipulator of the inspection system shown in FIG. 2 ;
**FIG. 3B** shows another schematic perspective view of the micromanipulator of the inspection system shown in FIG. 2 ;
**FIG. 4A** shows a schematic perspective sectional view of a probe support of the micromanipulator of FIGS. 3A and 3B in a first position;
**FIG. 4B** shows a schematic perspective sectional view of the probe support of the micromanipulator of FIGS. 3A, 3B and 4A in a second position;
**FIG. 5** shows a schematic view of another micromanipulator of the inspection system shown in FIG. 2;
**FIG. 6** shows a schematic view of a second embodiment of the inspection system of the present disclosure;
**FIG. 7** shows a flowchart depicting various steps of a method for inspecting a surface; and
**FIG. 8** shows a schematic representation of the method for inspecting the surface in accordance with an embodiment of the present disclosure.

The following table lists the reference numerals used in the drawings with the features to which they refer:

| Ref no. | Feature | FIG. |
|---|---|---|
| 9 | Principal and rotational Axis | 1 |
| 10 | Gas turbine engine | 1 |
| 11 | Engine core | 1 |
| 12 | Air intake | 1 |
| 13 | Intermediate pressure compressor (IPC) | 1 |
| 14 | High-pressure compressor (HPC) | 1 |
| 15 | Combustion equipment | 1 |
| 16 | High-pressure turbine (HPT) | 1 |
| 17 | Intermediate pressure turbine (IPT) | 1 |
| 18 | Low-pressure turbine (LPT) | 1 |
| 19 | Bypass exhaust nozzle | 1 |
| 20 | Core exhaust nozzle | 1 |
| 21 | Nacelle | 1 |
| 22 | Bypass duct | 1 |
| 23 | Propulsive fan | 1 |
| 26 | Shaft | 1 |
| 100 | Inspection system | 2 6 |
| 102 | Surface | 2 6 |
| 104 | Macromanipulator | 2 6 |
| 106 | Inspection end | 2 6 |
| 108 | Micromanipulator | 2 3A 3B 4A 4B 5 6 |
| 110 | Housing | 3A 3B 4A 4B 5 |
| 110A | Diameter | 3A |
| 112 | Guide rail | 3A 3B 4A 4B |
| 114 | Probe support | 3A 3B 4A 4B |
| 116 | Actuating arm | 3A 3B |
| 118 | Scotch yoke mechanism | 3A 3B 4A 4B |
| 118A | Slot | 3A 3B 4B |
| 118B | Pin | 3A 3B 4B |
| 120 | Actuating mechanism | 3A 4A 4B |
| 122 | Probe | 3A 3B 4A 4B 5 |
| 124 | Magnet | 4A 4B |
| 126 | Actuating coil | 3A 3B |
| 128 | Actuating circuit | 4B |
| 130 | Actuating current | 4A 4B |
| 132 | Extension arm | 5 |
| 134 | Spherical joint | 6 |
| 136 | Spring | 6 |
| 138 | Inspection regions | 8 |
| 140 | Defect | 8 |
| 200 | Method | 7 8 |
| 202 | Step | 7 |
| 204 | Step | 7 |
| 206 | Step | 7 |
| 208 | Step | 7 |
| 210 | Step | 7 |
| 212 | Step | 7 |
| 220 | Digital representation | 8 |
| 240 | Graph | 8 |
| 250 | Graph | 8 |
| A | First air flow | 1 |
| A1 | First position | 4A |
| A2 | Second position | 4B |
| B | Second air flow | 1 |

### DETAILED DESCRIPTION

Aspects and embodiments of the present disclosure will now be discussed with reference to the accompanying figures. Further aspects and embodiments will be apparent to those skilled in the art.

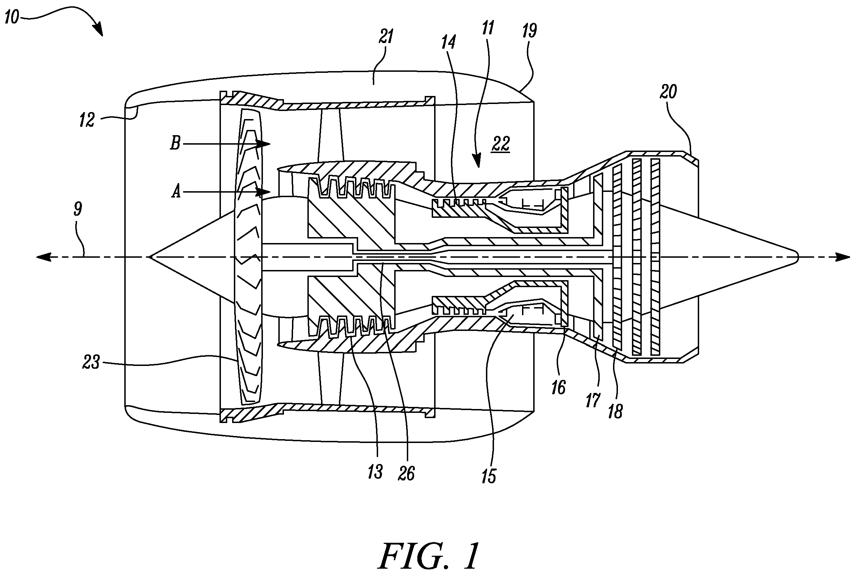

**FIG. 1** shows a streamwise sectional view of a gas turbine engine 10.

The gas turbine engine 10 generally has a principal and rotational axis 9. The gas turbine engine 10 includes an air intake 12, a propulsive fan 23, an engine core 11, a core shaft 26, an intermediate pressure compressor 13, a high-pressure compressor 14, combustion equipment 15, a high-pressure turbine 16, an intermediate pressure turbine 17, a low-pressure turbine 18, a core exhaust nozzle 20. The gas turbine engine 10 further includes a nacelle 21 that generally surrounds the gas turbine engine 10 and defines the air intake 12, a bypass duct 22 and a bypass exhaust nozzle 19.

The gas turbine engine 10 works in a conventional manner so that air entering the air intake 12 is accelerated by the fan 23 to produce two air flows. Specifically, the fan 23 produces a first air flow A (aka core air flow) that flows into the intermediate pressure compressor 13 and a second air flow B (aka bypass air flow) which passes through the bypass duct 22 to provide propulsive thrust. The intermediate pressure compressor 13 compresses the air flow A directed into it before delivering that air to the high-pressure compressor 14 where further compression takes place.

Furthermore, the compressed air exhausted from the high-pressure compressor 14 is directed into the combustion equipment 15 where it is mixed with fuel and the mixture is combusted. The resultant hot combustion products then expand through, and thereby drive the high, intermediate, and low-pressure turbines 16, 17, 18 before being exhausted through the core exhaust nozzle 20 to provide additional propulsive thrust. The high, intermediate, and low-pressure turbines 16, 17, 18 respectively drive the high, intermediate pressure compressors 14, 13 and the fan 23 (aka low-pressure compressor) by suitable interconnecting shafts.

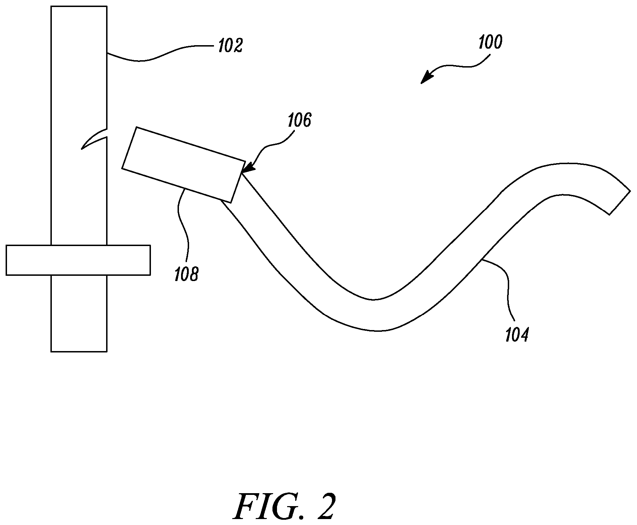

**FIG. 2** shows a schematic view of an inspection system 100 for inspecting a surface 102 in accordance with an embodiment of the present disclosure. In some examples, the surface 102 may include a surface of a component of the gas turbine engine 10 (shown in FIG. 1) in a confined space. In some embodiments, the component may be a gas turbine engine blade or vane.

As shown in FIG. 2, the inspection system 100 includes a macromanipulator 104. The macromanipulator 104 includes an inspection end 106 configured to be disposed proximal to the surface 102.

The macromanipulator 104 is movable with respect to the surface 102. The macromanipulator 104 may be a robotic arm and/or the macromanipulator 104 may be a continuum robot. The macromanipulator 104 may be an articulated guide tube.

As shown in FIG. 2, the inspection system 100 further includes a micromanipulator 108 coupled to the inspection end 106 of the macromanipulator 104.

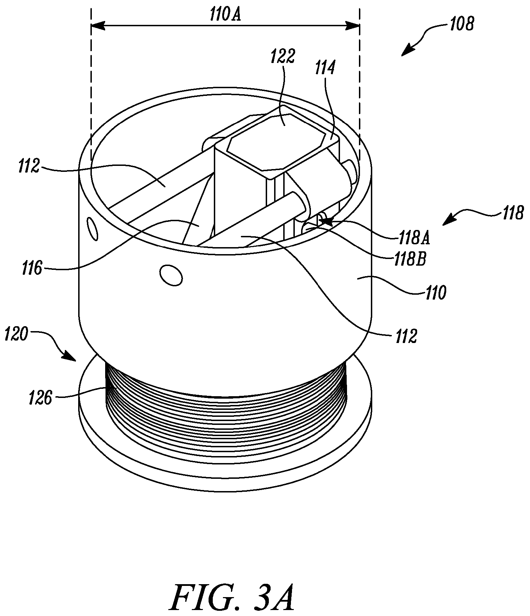

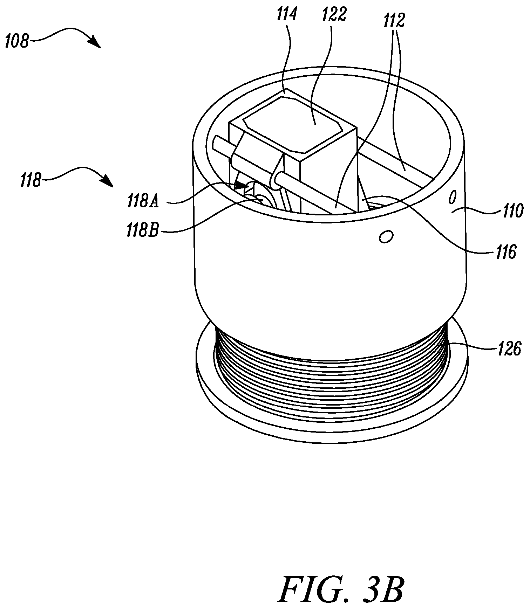

**FIG. 3A** shows a schematic perspective view of the micromanipulator 108 of the inspection system 100 shown in FIG. 2. FIG. 3B shows another schematic perspective view of the micromanipulator 108 of the inspection system 100 shown in FIG. 2.

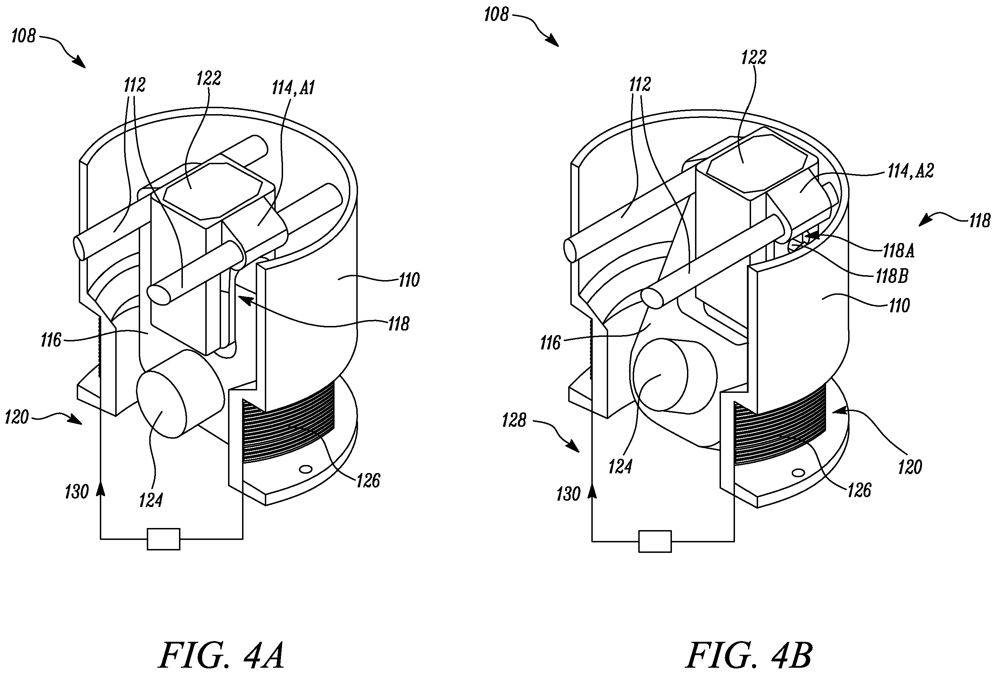

FIGS. 4A and 4B show perspective sectional views of the micromanipulator 108 shown in FIGS. 3A and 3B. Specifically, **FIG. 4A** shows a probe support 114 of the micromanipulator 108 in a first position A1 and **FIG. 4B** shows the probe support 114 of the micromanipulator 108 in a second position A2.

The micromanipulator 108 includes a housing 110. As shown in illustrated embodiment of FIGS. 3A-3B and FIGS. 4A-4B, the housing 110 has a circular cross section. In such embodiments, the housing 110 has a diameter 110A. The diameter 110A of the housing 110 may be less than 50 millimetres. The diameter 110A of the housing 110 may be about 10 millimetres. The diameter 110A of the housing 110 may be about 5 millimetres.

The micromanipulator 108 further includes a pair of guide rails 112 at least partially disposed within and fixedly coupled to the housing 110. The micromanipulator 108 further includes a probe support 114 slidably coupled to the pair of guide rails 112.

The micromanipulator 108 further includes an actuating arm 116 disposed within the housing 110 and coupled to the probe support 114 via a scotch yoke mechanism 118. The actuating arm 116 may be connected to the probe support 114 via the scotch yoke mechanism 118 to translate a rotational motion of the actuating arm 116 to a linear motion of the probe support 114.

As shown in FIG. 4A and FIG.4B, the micromanipulator 108 further includes an actuating mechanism 120 configured to rotate the actuating arm 116 relative to the housing 110.

The actuating mechanism 120 may include a magnet 124 (shown in FIGS. 4A and 4B) fixedly coupled to the actuating arm 116. The magnet 124 may be a neodymium magnet or any suitable permanent magnet.

The actuating mechanism 120 may further include an actuating coil 126 disposed around the housing 110. The actuating coil 126 may be a copper coil or any suitable metal coil.

The actuating mechanism 120 may further include an actuating circuit 128 (shown in FIGS. 4A and 4B) electrically connected to the actuating coil 126 and configured to provide an actuating current 130 (shown in FIGS. 4A and 4B) to the actuating coil 126. The actuating coil 126 is configured to electromagnetically rotate the magnet 124 and the actuating arm 116 relative to the housing 110 in response to the actuating current 130.

The actuating coil 126 is used to create a magnetic field. A direction of the magnetic field may be reversed by reversing a polarity of the actuating current 130. When at rest (for example in the first position A1 shown in FIG. 4A), the direction of the magnetic field may lie perpendicular to a field direction of the actuating coil 126. Therefore, when the actuating current 130 is passed through the actuating coil 126, the magnet 124 may rotate to align with the magnetic field taking the actuating arm 116 with it. A frequency of oscillation of the actuating arm 116 may be varied by changing how often the polarity of the actuating current 130 is reversed.

As shown in FIGS. 4A and 4B, the scotch yoke mechanism 118 is configured to translate the probe support 114 in response to the rotation of the actuating arm 116 such that the probe support 114 slides along the pair of guide rails 112.

The probe support 114 may be constrained to the linear motion by the pair of guide rails 112. Further, a length of a stroke of the probe support 114 may be limited by a size of the housing 110. Specifically, the length of the stroke of the probe support 114 may be limited by the diameter 110A of the housing 110.

For example, the length of each stroke of the probe support 114 may be of about 5 millimetres when the diameter 110A of the housing 110 is about 10 millimetres.

An angle of rotation of the actuating arm 116 may be restricted by the actuating arm 116 contacting the housing 110. A torque and thus an angular acceleration of the actuating arm 116 may be varied by changing a number of turns of the actuating coil 126, the actuating current 130, or the magnet 124 used.

The scotch yoke mechanism 118 may include a pair of slots 118A (shown in FIGS. 3A and 3B) and a pair of pins 118B (shown in FIGS. 3A and 3B). Each pin 118B from the pair of pins 118B at least partially and rotatably inserts a corresponding slot 118A from the pair of slots 118A.

The inspection system 100 further includes a probe 122 coupled to the probe support 114 for inspecting the surface 102. The probe 122 may be an eddy current probe. The probe 122 may be an ultrasonic probe.

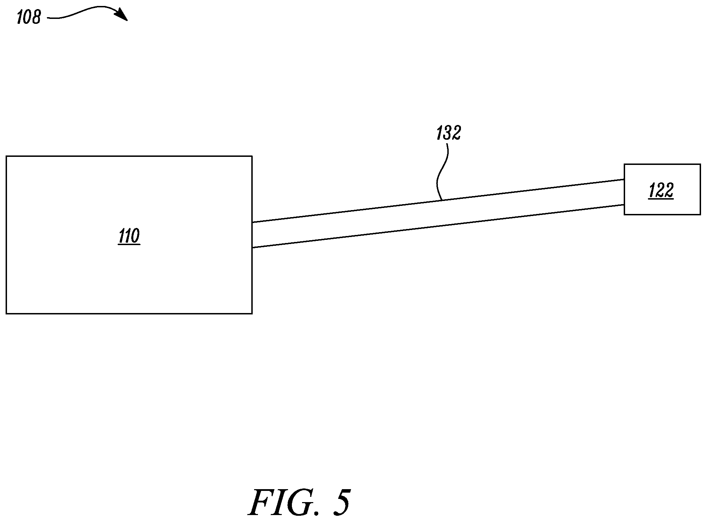

FIG. 5 shows a schematic view of another micromanipulator 108 of the inspection system shown in FIG. 2.

In some cases, the magnetic field of the micromanipulator 108 may negatively affect an inspection procedure, for example, the magnetic field of the micromanipulator 108 may interfere with signals of the probe 122. The micromanipulator 108 depicted in FIG. 5 has an extension arm 132 that extends from the probe support 114 (shown in FIG. 3A), such that the probe 122 is distal to the housing 110.

This may prevent any interference of the magnetic field of the micromanipulator 108 with the signals of the probe 122. In some cases, the extension arm 132 may further facilitate miniaturisation of the probe 122.

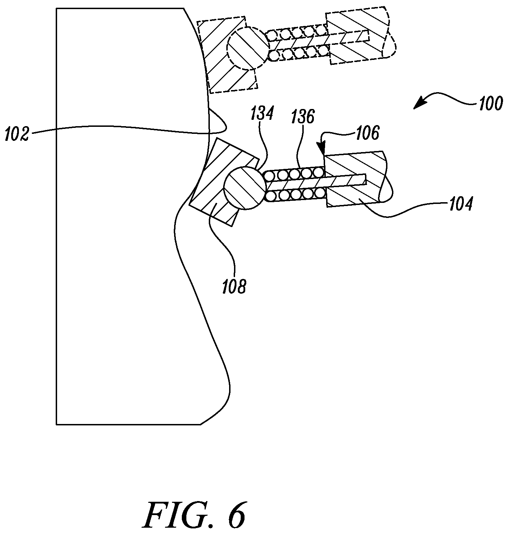

**FIG. 6** shows a schematic view of a second embodiment of the inspection system 100 of the present disclosure. Specifically, FIG. 6 shows the inspection system 100 in two different regions of the surface 102. In the illustrated embodiment of FIG. 6, the surface 102 is curved.

In this embodiment, the inspection system 100 further includes a spherical joint 134. The spherical joint 134 movably couples the micromanipulator 108 to the inspection end 106 of the macromanipulator 104.

The spherical joint 134 may allow rotation of the micromanipulator 108 such that the probe 122 is oriented perpendicular to the surface 102.

In this embodiment, the inspection system 100 further includes a spring 136. The spring 136 may be disposed around the spherical joint 134 and configured to bias the micromanipulator 108 towards the surface 102.

The spring 136 may ensure that a contact between the micromanipulator 108 and the surface 102 is maintained.

The spherical joint and spring mechanism arrangement of the embodiment shown in in FIG. 6 provides a flexible interface between the micromanipulator 108 and the macromanipulator 104, e.g. for inspecting curved surfaces.

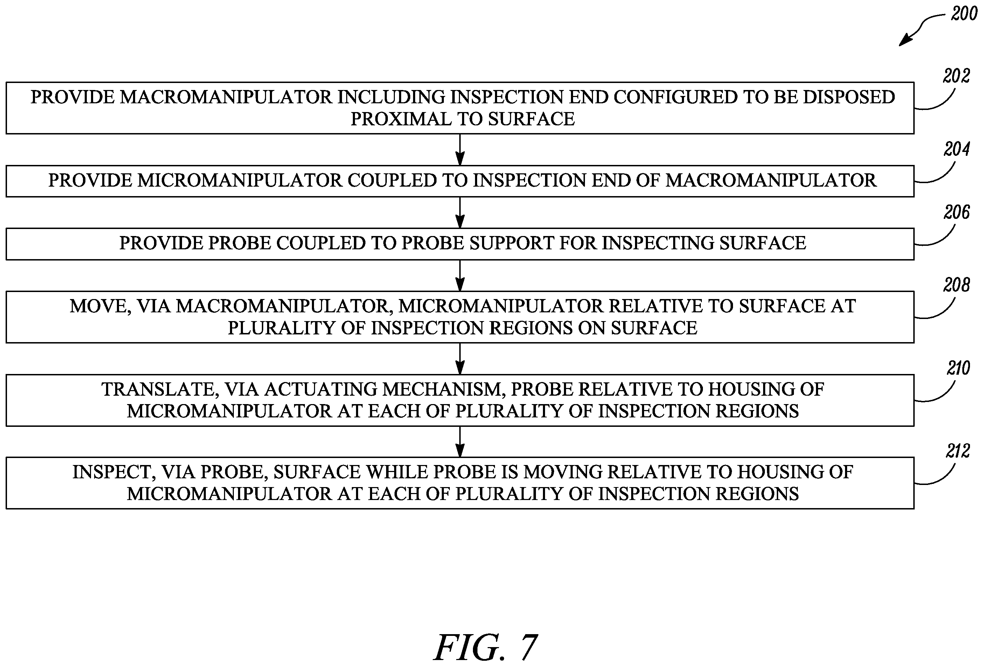

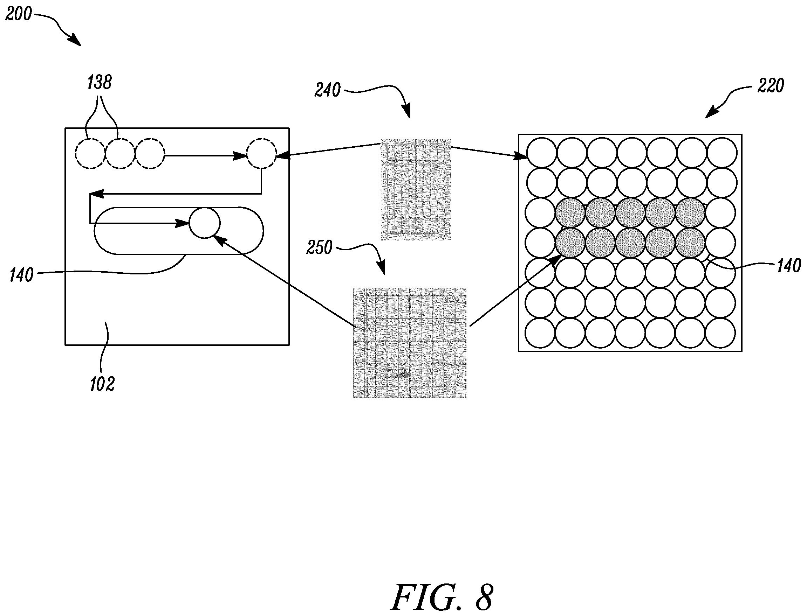

**FIG. 7** shows a flowchart depicting various steps of a method 200 for inspecting a surface 102, e.g. a surface of a component located in a confined space within a gas turbine engine. FIG. 8 shows a schematic representation of the method 200 in accordance with an embodiment of the present disclosure. The method 200 will be described with reference to FIGS. 2 to 8.

At step 202, the method 200 includes providing the macromanipulator 104 including the inspection end 106 configured to be disposed proximal to the surface 102. The macromanipulator 104 is movable with respect to the surface 102.

At step 204, the method 200 further includes providing the micromanipulator 108 coupled to the inspection end 106 of the micromanipulator 108.

As discussed above, the micromanipulator 108 includes the housing 110 and the pair of guide rails 112 at least partially disposed within and fixedly coupled to the housing 110. The micromanipulator 108 further includes the probe support 114 slidably coupled to the pair of guide rails 112 and the actuating arm 116 disposed within the housing 110 and coupled to the probe support 114 via the scotch yoke mechanism 118. The micromanipulator 108 further includes the actuating mechanism 120 configured to rotate the actuating arm 116 relative to the housing 110. The scotch yoke mechanism 118 is configured to translate the probe support 114 in response to the rotation of the actuating arm 116 such that the probe support 114 slides along the pair of guide rails 112.

At step 206, the method 200 further includes providing the probe 122 coupled to the probe support 114 for inspecting the surface 102.

The method 200 may further include rotating, via the spherical joint 134 (shown in FIG. 6), the micromanipulator 108 relative to the macromanipulator 104 to orient the probe 122 perpendicular to the surface 102. The method 200 may further include biasing, via the spring 136 disposed around the spherical joint 134, the micromanipulator 108 towards the surface 102.

At step 208, the method 200 further includes moving, via the macromanipulator 104, the micromanipulator 108 relative to the surface 102 at a plurality of inspection regions 138 (shown in **FIG. 8**) on the surface 102. The probe 122 may be positioned on top of the plurality of inspection regions 138 on the surface 102 using the macromanipulator 104.

At step 210, the method 200 further includes translating, via the actuating mechanism 120, the probe 122 relative to the housing 110 of the micromanipulator 108 at each of the plurality of inspection regions 138. The actuating mechanism 120 may include the magnet 124 fixedly coupled to the actuating arm 116. The actuating mechanism 120 may further include the actuating coil 126 disposed around the housing 110. The actuating mechanism 120 may further include the actuating circuit 128 electrically connected to the actuating coil 126.

Translating the probe 122 may further include providing, via the actuating circuit 128, the actuating current 130 to the actuating coil 126. Translating the probe 122 may further include electromagnetically rotating, via the actuating coil 126, the magnet 124 and the actuating arm 116 relative to the housing 110 in response to the actuating current 130.

At step 212, the method 200 further includes inspecting, via the probe 122, the surface 102 while the probe 122 is moving relative to the housing 110 of the micromanipulator 108 at each of the plurality of inspection regions 138. The inspecting the surface 102 may further include eddy current testing of the surface 102 via the probe 122. The method 200 may further include recording coordinates of the micromanipulator 108 at each of the plurality of inspection regions 138.

FIG. 8 further illustrates a graph 240 and a graph 250. Specifically, the graph 240 is a scan of a portion of the surface 102 where no defects are detected in the surface 102 and the graph 250 is a scan of a portion of the surface 102 where a defect 140 is detected in the surface 102.

The probe 122 may include one or more coils for inducing eddy currents in the surface 102. A signal provided by the probe 122 may, for example, be a voltage signal proportional to, or at least related to, impedance changes in the one or more coils.

When the probe 122 does not detect a defect, a flat signal may appear as shown in the graph 240. Further, when the probe 122 detects a defect, the signal increases. Specifically, as shown in the graph 250, when the probe 122 is placed on the defect 140, the signal increases. Therefore, a change in the signal may be used to identify a presence of a defect, such as a crack.

The method 200 further includes recording coordinates of the micromanipulator 108 at each of the plurality of inspection regions 138. The method 200 may further include mapping the coordinates of the micromanipulator 108 at each of the plurality of inspection regions 138 in a digital representation 220 of the plurality of inspection regions 138 on the surface 102.

By recording the coordinates of the micromanipulator 108 and mapping the coordinates of the micromanipulator 108 at each of the plurality of inspection regions 138 in the digital representation 220, it may be possible to record a surface map of the surface 102 in the digital representation 220.

The method 200 may further include, when the probe 122 detects the defect 140 in one or more inspection regions 138 from the plurality of inspection regions 138, visually representing the defect 140 and corresponding coordinates in the digital representation 220.

Visually representing the defect 140 and the corresponding coordinates in the digital representation 220 may facilitate interpretation of the defect 140 by an operator and showcase a location of the defect 140 to the operator. Further, an appearance of the defect 140 may also be clear to the operator.

## Claims

1. An inspection system (100) for inspecting a surface (102), the inspection system (100) comprising:
a macromanipulator (104) comprising an inspection end (106) configured to be disposed proximal to the surface (102), wherein the macromanipulator (104) is movable with respect to the surface (102);
a micromanipulator (108) coupled to the inspection end (106) of the macromanipulator (104), the micromanipulator (108) comprising:
a housing (110):
a pair of guide rails (112) at least partially disposed within and fixedly coupled to the housing (110);
a probe support (114) slidably coupled to the pair of guide rails (112);
an actuating arm (116) disposed within the housing (110) and coupled to the probe support (114) via a scotch yoke mechanism (118); and
an actuating mechanism (120) configured to rotate the actuating arm (116) relative to the housing (110), and wherein the scotch yoke mechanism (118) is configured to translate the probe support (114) in response to the rotation of the actuating arm (116) such that the probe support (114) slides along the pair of guide rails (112); and
a probe (122) coupled to the probe support (114) for inspecting the surface (102).

2. The inspection system (100) of claim 1, wherein the actuating mechanism (120) comprises:
a magnet (124) fixedly coupled to the actuating arm (116);
an actuating coil (126) disposed around the housing (110); and
an actuating circuit (128) electrically connected to the actuating coil (126) and configured to provide an actuating current (130) to the actuating coil (126), wherein the actuating coil (126) is configured to electromagnetically rotate the magnet (124) and the actuating arm (116) relative to the housing (110) in response to the actuating current (130).

3. The inspection system (100) of claim 2, wherein the magnet (124) is a neodymium magnet.

4. The inspection system (100) of claim 2 or 3, wherein the actuating coil (126) is a copper coil.

5. The inspection system (100) of any preceding claim, further comprising an extension arm (132) extending from the probe support (114) such that the probe (122) is distal to the housing (110).

6. The inspection system (100) of any preceding claim, wherein the probe (122) is an eddy current probe.

7. The inspection system (100) of any preceding claim, wherein the scotch yoke mechanism (118) comprises a pair of slots (118A) and a pair of pins (118B), and wherein each pin (118B) from the pair of pins (118B) at least partially and rotatably inserts a corresponding slot (118A) from the pair of slots (118A).

8. The inspection system (100) of any preceding claim, wherein the macromanipulator (104) is a robotic arm.

9. The inspection system (100) of any preceding claim, further comprising a spherical joint (134) movably coupling the micromanipulator (108) to the inspection end (106) of the macromanipulator (104).

10. The inspection system (100) of claim 9, further comprising a spring (136) disposed around the spherical joint (134) and configured to bias the micromanipulator (108) towards the surface (102).

11. A method (200) for inspecting a surface (102), the method (200) comprising the steps of:
providing a macromanipulator (104) comprising an inspection end (106) configured to be disposed proximal to the surface (102), wherein the macromanipulator (104) is movable with respect to the surface (102);
providing a micromanipulator (108) coupled to the inspection end (106) of the macromanipulator (104), the micromanipulator (108) comprising:
a housing (110):
a pair of guide rails (112) at least partially disposed within and fixedly coupled to the housing (110);
a probe support (114) slidably coupled to the pair of guide rails (112);
an actuating arm (116) disposed within the housing (110) and coupled to the probe support (114) via a scotch yoke mechanism (118); and
an actuating mechanism (120) configured to rotate the actuating arm (116) relative to the housing (110), and wherein the scotch yoke mechanism (118) is configured to translate the probe support (114) in response to the rotation of the actuating arm (116) such that the probe support (114) slides along the pair of guide rails (112);
providing a probe (122) coupled to the probe support (114) for inspecting the surface (102);
moving, via the macromanipulator (104), the micromanipulator (108) relative to the surface (102) at a plurality of inspection regions (138) on the surface (102);
translating, via the actuating mechanism (120), the probe (122) relative to the housing (110) of the micromanipulator (108) at each of the plurality of inspection regions (138); and
inspecting, via the probe (122), the surface (102) while the probe (122) is moving relative to the housing (110) of the micromanipulator (108) at each of the plurality of inspection regions (138).

12. The method (200) of claim 11, wherein the actuating mechanism (120) comprises:
a magnet (124) fixedly coupled to the actuating arm (116);
an actuating coil (126) disposed around the housing (110); and
an actuating circuit (128) electrically connected to the actuating coil (126); and
wherein translating the probe (122) further comprises:
providing, via the actuating circuit (128), an actuating current (130) to the actuating coil (126); and
electromagnetically rotating, via the actuating coil (126), the magnet (124) and the actuating arm (116) relative to the housing (110) in response to the actuating current (130).

13. The method (200) of claim 11 or 12, further comprising rotating, via a spherical joint (134), the micromanipulator (108) relative to the macromanipulator (104) to orient the probe (122) perpendicular to the surface (102).

14. The method (200) of claim 13, further comprising biasing, via a spring (136) disposed around the spherical joint (134), the micromanipulator (108) towards the surface (102).

15. The method (200) of any one of the claims 11 to 14, further comprising recording coordinates of the micromanipulator (108) at each of the plurality of inspection regions (138), and mapping the coordinates of the micromanipulator (108) at each of the plurality of inspection regions (138) in a digital representation (220) of the plurality of inspection regions (138) on the surface (102).
